# EUROPEAN PATENT APPLICATION

(11) **EP 2 177 847 A1**
(43) Date of publication of application: **21.04.2010**
(21) Application number: 08166798.2
(22) Date of filing: 16.10.2008
(51) Int. Cl.: F25B 41/06

(54) **Thermostatic extension valve device for refrigerant fluid circuit**

(71) Applicant: VALEO SYSTEMES THERMIQUES, 78321 Le Mesnil St Denis Cedex (FR)
(72) Inventor: Karl, Stefan, 78580 Bazemont (FR); Haussmann, Roland, 69168 Wiesloch (DE); Krauspe, Jörg, 08468 Reichenbach (DE)

(57) **Abstract**

The present invention relates to a thermostatic expansion valve device (10) for a refrigerant fluid circuit, comprising :
- valve means (111) intended to control the refrigerant fluid mass flow rate through the thermostatic expansion valve device (10),
- external control means (130) acting on valve means (111) so as to define a working setting for the thermostatic expansion valve device (10),
- internal control means (121, 122, 123) acting on valve means (111) so as to control the refrigerant fluid mass flow rate corresponding to the working setting according to internal thermal parameters of the refrigerant fluid circuit.

The thermostatic expansion valve device (10) further comprises adjustment means (150, 170) for controlling external control means (130) so as to change the working setting in operation of the thermostatic expansion valve device (10).

## Description

The present invention relates to a thermostatic expansion valve device for a refrigerant fluid circuit.

The invention is particularly relevant to refrigerant fluid circuit for air conditioning the cabin of motor vehicles.

Thermostatic expansion valve (TXV) devices for a refrigerant circuit, for an air conditioning installation, also known as an A/C loop, comprise a valve means made in the form of a ball which can be spaced away to a greater or lesser extent from a conical seating, thus enabling the control of the mass flow rate of the refrigerant fluid flowing to the evaporator inlet through the thermostatic expansion valve device. The valve means is connected through a control rod to a heat-sensitive body such arranged as to control the position of the valve means according to thermal parameters internal to the refrigerant fluid circuit, namely the temperature of the refrigerant fluid at the evaporator outlet. The control rod is generally driven by the pressure variations of a control fluid contained in a bulb of the thermostatic expansion valve device. These pressure variations are caused by temperature variations of the refrigerant fluid at the evaporator outlet, said temperature variations being transmitted to the control fluid in the bulb through the heat-sensitive body. Such devices are known, for instance, from EP 1 172 618 and US 5,924,299.

Moreover, the valve means is subject to the action of biasing means, generally formed by a compression spring, designed to define a working setting for the thermostatic expansion valve device. The actual position of the valve means thus results from the balance between the action of the control rod and that of the biasing means.

At present, the biasing means are set by the thermostatic expansion valve device suppliers and cannot vary afterwards. This initial setting depends on the type of the refrigerant circuit, the thermostatic expansion valve device used within the refrigerant circuit and on the superheat desired.

However, the general performance of refrigerant fluid circuits as those used in motor vehicles for air conditioning the cabins may be strongly influenced by various external parameters such as vehicle speed, motor speed, blower speed, outside temperature, air mode (fresh air or recirculation) air target temperature, etc.

For instance, it is known that cooling capacity depends on motor speed and car speed. As a consequence, one can understand that it should be of the highest interest to include these two parameters in the control of the circuit so that their variations should be taken into account during operation of the thermostatic expansion valve device.

Thus, since the external parameters as above-mentioned are likely to vary while the air conditioning circuit is working, an object of the present invention is to provide a thermostatic expansion valve device which could take these variations into account for a better performance of the circuit.

For this purpose, the invention proposes a thermostatic expansion valve device for a refrigerant fluid circuit, comprising valve means intended to control the refrigerant fluid mass flow rate through the thermostatic expansion valve device, external control means acting on valve means so as to define a working setting for the thermostatic expansion valve device and internal control means acting on valve means so as to control the refrigerant fluid mass flow rate corresponding to the working setting according to internal thermal parameters of the refrigerant fluid circuit.

More particularly, the thermostatic expansion valve device further comprises adjustment means for controlling external control means so as to change the working setting in operation of the thermostatic expansion valve device.

According to a particular embodiment, adjustment means are controlled according to external parameters, which may independent from parameters of the refrigerant fluid circuit.

As a result of the invention, in operation of the thermostatic expansion valve device, valve means can be controlled, simultaneously ot alternatively, by two types of control means. Control means can be internal control means and/or external control means through the adjustment means.

On the one hand, internal control means are considering variations of thermal parameters related to the refrigerant fluid. Those thermal parameters related to the refrigerant fluid are mainly the pressure and the temperature. These internal control means may be similar to those already described with reference to prior art.

On the other hand, adjustment means are responding to variations of external parameters which may not be directly related to the refrigerant fluid circuit. Those external parameters are nevertheless of importance in the performance of the refrigerant fluid circuit. Such external parameters may be a pressure, a temperature of a fluid outside of the refrigerant fluid circuit, such like the air into a car compartment, a speed value of the vehicle, atmosphere parameter, ... As those external parameters vary, the adjustment means act accordingly on the external control means so as to optimise the superheat of the refrigerant fluid circuit by modifying the working setting of thermostatic expansion valve device.

The present invention may be regarded as an alternative between a standard thermostatic expansion valve device (TXV) according to the prior art and an electrical expansion valve (EVX) device. The stability of the overall device is ensured by the closed loop control provided by the standard thermostatic expansion valve device while the control is ensured by an open loop control as in a EVX device. The open loop makes it possible to adapt the working setting according to the vehicle and the refrigerant fluid circuit operation conditions.

It should be noted that the invention has the advantage to be based on standard thermostatic expansion valve devices which are well known technologies in the field of air conditioning, thus minimizing the technical risks and the economic costs.

According to the invention, external control means comprise a compression spring intended to bias valve means. The working setting is defined by the biasing state of said spring means. In addition, adjustment means are suitable to change the biasing state of the compression spring.

In particular, the compression spring is arranged in a housing in the thermostatic expansion valve device. A first end of the compression spring is in abutment against valve means.

In a first embodiment, the housing is screwed on the thermostatic expansion valve device. In this arrangement, a second end of the compression spring is in abutment against a wall of said housing.

Additionally, adjustment means comprise screw-driving means suitable to move the housing so as to shift the wall and change the compression state of the compression spring.

Preferably, the screw-driving means comprise a stepper motor. An advantage of this feature is to use well-known standard stepper motors, similar to those currently used in heating, ventilating, air conditioning (HVAC) equipments. In this context, the stepper motor is controlled by an electronic unit according to external parameters.

In a second embodiment, a second end of the compression spring is in abutment against a drive pin arranged in the housing. In this arrangement, adjustment means comprise translating means suitable to shift the drive pin through a wall of the housing so as to change the compression state of said compression spring.

According to the invention, translating means comprise a linear motor. Therefore, the linear motor is controlled by an electronic unit according to external parameters.

Preferably, the housing is screwed in the thermostatic expansion valve device so as to enable a pre-adjustment of the working setting.

In that way, the working setting may be pre-adjusted to an initial value by the thermostatic expansion valve device supplier by acting on the screwed housing. The initial working setting is kept as basic setting all over the operation time. The adjustment means can only tune this basic setting to ensure a better efficiency of the thermostatic expansion valve device.

As an example, adjustment means modify the behaviour at the evaporator outlet in order to reach a drier behaviour. The advantages of a drier control of the thermostatic expansion valve device are an increase of the performance of the fluid refrigerant circuit, resulting in a possible downsizing of the circuit devices, and an increase of the coefficient of performance (COP) with the consequence of less fuel consumption.

Further features and advantages of the invention will appear on reading the following detailed description of some preferred embodiments of the invention, which is given by way of non-limiting example only.

The invention will now be described in more details with reference to the accompanying drawings in which:
Figure 1a is a cross sectional view of a first embodiment of a thermostatic expansion valve device according to the present invention,
Figure 1b is a top view showing a stepper motor of the thermostatic expansion valve device of Figure 1a,
Figures 1c to 1g are top views of various connectors between the stepper motor of Figure 1b and the thermostatic expansion valve device of Figure 1a,
Figure 2a shows diagrams of the saturating curve of the refrigerant fluid (solid line) and saturating curves of same refrigerant liquid as control fluid for various working settings (dashed lines),
Figure 2b shows diagrams of the saturating curve of the refrigerant fluid (solid line) and saturating curves of a control fluid different from the refrigerant fluid for various working settings (dashed lines),
Figure 3a is a cross sectional view of a second embodiment of a thermostatic expansion valve device according to the invention involving a linear motor,
Figure 3b is a cross sectional view of a first connector between the linear motor and the thermostatic expansion valve device of Figure 3a, and
Figure 3c is a cross sectional view of a second connector between the linear motor and the thermostatic expansion valve device of Figure 3a.

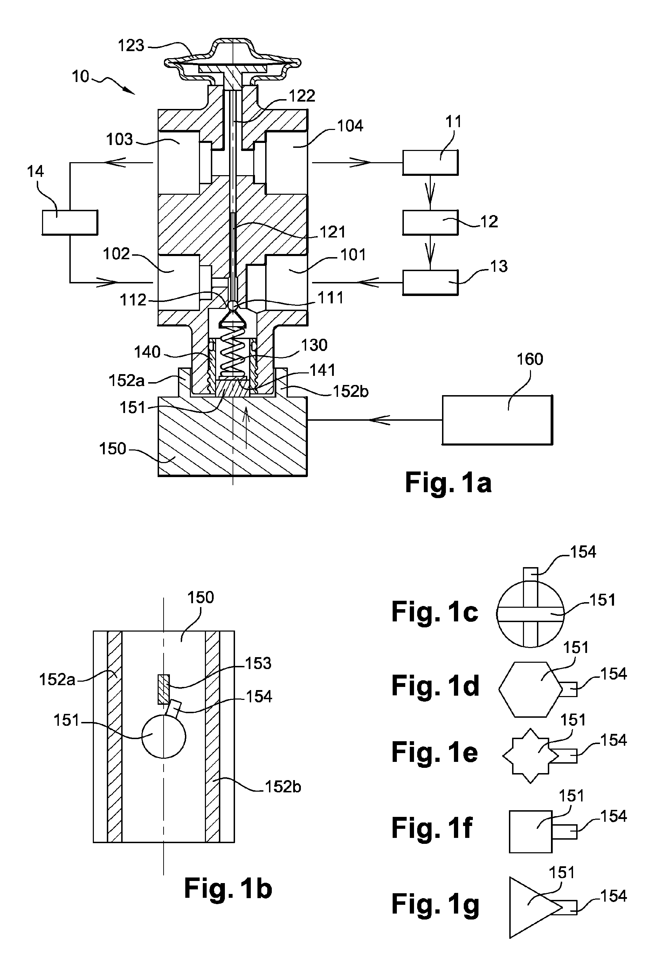

The Figure 1a shows a thermostatic expansion valve (TXV) device 10 for a refrigerant circuit, such as an A/C loop, which also comprises at least a compressor 11, which may be of the fixed or variable type, although the invention turns out to be more effective for the variable ones, a condenser 12, a receiver 13 and an evaporator 14.

In addition, it should be noted that the refrigerant circuit could also include an internal heat exchanger (IHX) in order to increase the efficiency of the circuit.

As depicted on the Figure 1a, the thermostatic expansion valve device 10 is designed to act as an expansion valve relative to the refrigerant fluid coming from the receiver 13. The refrigerant fluid enters the thermostatic expansion valve device 10 through a first inlet opening 101 and exits from the thermostatic expansion valve device 10 under an expanded condition through a first outlet opening 102 in communication with the inlet of the evaporator 14.

The expansion of the refrigerant fluid is performed by valve means consisting of a ball 111 cooperating with a conical seating 112. The space between the ball 111 and the conical seating 112 is decreased or increased in order to control the mass flow rate of the refrigerant liquid flowing to the inlet of the evaporator 14 through the thermostatic expansion valve device 10.

The working position of the ball 111 is defined in terms of balance between internal control means and external control means which will now be described in detail.

First, the ball 111 is subject to the action of internal control means intended to control the mass flow rate of the refrigerant fluid according to internal thermal parameters. Those internal thermal parameters are characteristics of the refrigerant circuit such as, for example, a pressure and a temperature of the refrigerant fluid.

The internal control means shown in the Figure 1a are similar to those described in EP1172618 and US5924299. Consequently, any further explanations are not needed in the context of this invention.

It will only be reminded here that these means comprise a control rod 121 connected at one end to the ball 111 and at another end to a heat-sensitive element 122 arranged in the stream of the refrigerant fluid flowing from the outlet of the evaporator 14 through a second inlet opening 103 of the thermostatic expansion valve device 10 towards the compressor 11 through a second outlet opening 104 of the thermostatic expansion valve device 10. The heat-sensitive body 122 is in thermal and mechanical contact with a control fluid contained in a sealed bulb 123. Consequently, if, for instance, the temperature at the outlet of the evaporator 14 increases, the control fluid expands and moves the ball 111 away from the seating 112, resulting in an increase of the mass flow rate of the refrigerant fluid through the thermostatic expansion valve device 10. It will be readily understood that the internal control means have a stabilization effect with respect to the saturating curve of the control fluid. This control fluid may be either same as the refrigerant fluid or different.

On the other hand, the ball 111 is subject to the action of external control means comprising a compression spring 130 arranged in a housing 140 retained with maintaining means, for instance screwed, within in the thermostatic expansion valve device 10. At one end, the compression spring 130 is in abutment against a wall 141 of the housing 140, and at the other end in abutment against the ball 111.

The aim of the compression spring 130 is to bias the ball 111 in order to define the working setting for the thermostatic expansion valve device 10. The value of the working setting to be used for a given refrigerant circuit is determined by the superheat imposed to the loop, i.e. the deviation between the temperature of the refrigerant fluid as defined by the saturating curve and the desired temperature as defined according to parameters external to the refrigerant circuit. Those parameters external to the refrigerant circuit are, in particular, the vehicle speed, the motor speed, the blower speed, the outside temperature, the air mode between fresh air or recirculation, the air target temperature, etc.

Since the working setting is directly linked to the compression state of the compression spring 130 and thus to the position of the screwed housing 140 in the thermostatic expansion valve device 10, the housing 140 should be more or less screwed in accordance to the desired working setting. This setting operation is generally performed by the supplier of the thermostatic expansion valve device for each refrigerant circuit. After the thermostatic expansion valve device is installed in the loop, the working setting cannot be modified even if external parameters vary.

However, in actual operation, those external parameters may vary and, in that case, it should be suitable to adapt the superheat of the refrigerant circuit to the fresh values of external parameters. To achieve that goal, the invention proposes adjustment means capable of varying the working setting by controlling the compression state of the compression spring 130, the adjustment means being in turn controlled according to the external parameters.

In the Figure 1a, the adjustment means consist of screw-driving means suitable for moving the housing 140 and shifting the wall 141 in order to vary the compression force of the compression spring 130.

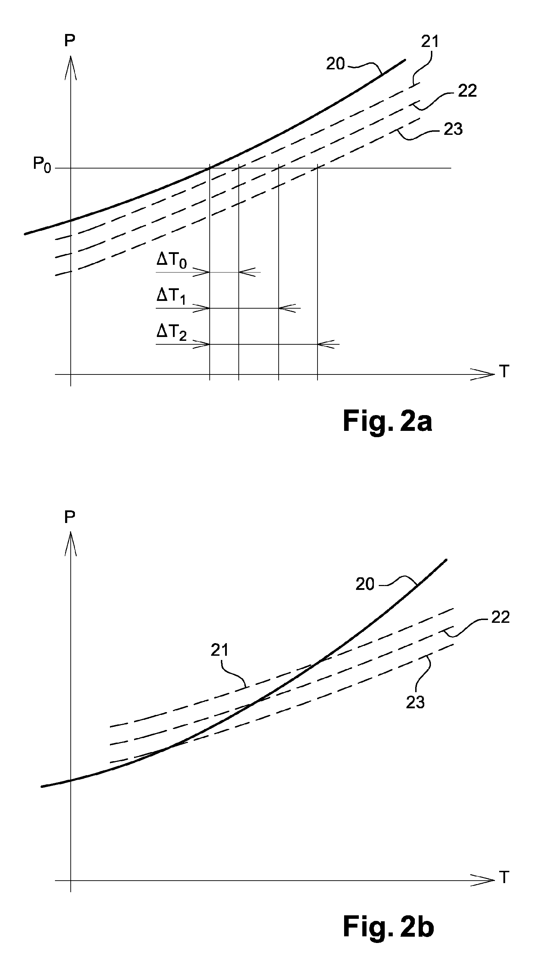

The operating principle of the invention is shown on the Figure 2a. According tp the present example, the control fluid in the bulb 123 is the same as the refrigerant fluid flowing in the refrigerant circuit. The solid line is the saturating curve of the fluid is represented by the solid line 20. A first dashed line 22 represents an average working setting for a given initial setting of the housing 140. A second dashed line 21 and a third dashed line 23 characterize working settings respectively obtained by screwing or unscrewing the housing 140 from the initial position.

It is apparent from the Figure 2a that for a given saturation pressure P₀ of the refrigerant fluid in the evaporator 14, the superheat can be set at any aimed value, i.e. ΔT₀, ΔT₁ or ΔT₂ by an appropriate screwing of the housing 140.

In the Figure 2b, the control fluid is different from the refrigerant fluid. The solid line 20 is the saturating curve of the refrigerant fluid while dashed lines 21, 22 and 23 are working setting curves as defined in Figure 2a. Those setting curves result from shifts of the saturating curve of the control fluid after screwing or unscrewing of the housing 140.

According to a first embodiment of the present invention, the screw-driving means shown in Figure 1a comprise a stepper motor 150 controlled by a signal, in particular of the LIN or CAN type, coming from an electronic unit 160 of the vehicle, such as an electronic central unit (ECU) or the control panel. The electronic unit 160 makes it possible determining the relevant shift to be applied to the housing 140 based on data relative to the external parameters provided by various sensors located in the vehicle or estimated by a specific algorithm.

The stepper motor 150 has a connector head 151 intended to cooperate with a corresponding connection bore 142 of the housing 140. Figures 1c to 1g show various shapes that could be given to the connector head 151.

According to an advantageous embodiment, as depicted on Figures 1a and 1b, the stepper motor 150 comprises two lateral walls 152a and 152b. Those wall 152a and 152b prevent the thermostatic expansion valve device 10 from auto-rotating when the stepper motor 150 is operating.

In addition, as shown in Figure 1b, a fixed abutment 153 is provided to act as a reference for the stepper motor 150. A protrusion 154 is disposed on the connector head 151 of the stepper motor 150 which cooperates with the fixed abutment 153 in order to define an initial or specific position. The rotation of the stepper motor 150 is thus limited to a 360° revolution. The thread of the housing 140 is calculated accordingly so that a revolution of 360° may be sufficient to get the overall path sought for the housing 140.

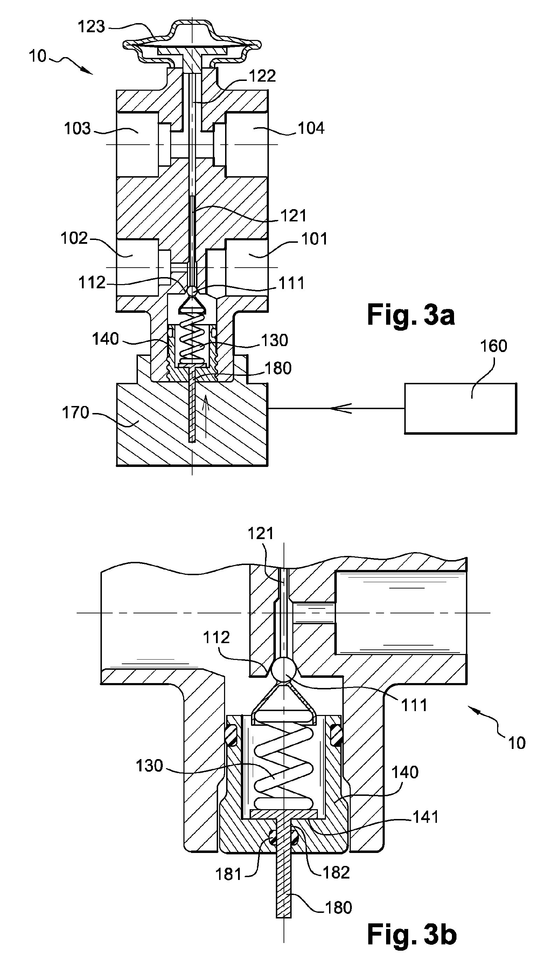

A second embodiment of the invention is shown on the Figure 3a wherein the adjustment means comprise translating means 170 capable of shifting a drive pin 180 arranged inside the housing 140 in which is arranged the compression spring 130 and against which the compression spring 130 is in abutment. According to the embodiment shown on the Figure 3a, the translating means comprise a linear motor 170 designed for moving the drive pin 180 up and down to obtain a compression effort of the compression spring 130 corresponding to the superheat desired for the thermostatic expansion valve device 10.

Similarly to the stepper motor 150 of the embodiment of the Figure 1a, the linear motor 170 is controlled by an electronic unit 160 of the vehicle, the ECU or the control panel. The LIN or CAN signal sent to the linear motor 170 by the electronic unit 160 is defined in relation with data relative to the external parameters provided by various sensors in the vehicle or estimated by a specific algorithm.

In this second embodiment, the housing 140 is also screwed in order to enable a pre-adjustment of the working setting. This pre-adjusted working setting is the highest setting value, in terms of mass flow rate, requested for the overall refrigerant circuit operation range. The highest setting value controls the loop with the lowest superheat or even with liquid at the outlet of the evaporator 14 and is preferably used for low load conditions to reduce the noise level and ensure a sufficient oil recirculation by low refrigerant fluid mass flow rate.

The figure 3b shows how the drive pin 180 can be linked to the thermostatic expansion valve device 10. In this embodiment, a O-ring 181 is arranged in a hole passage 182 of the housing 140 in order to ensure the tightness when the pin 180 is moving within the housing 140.

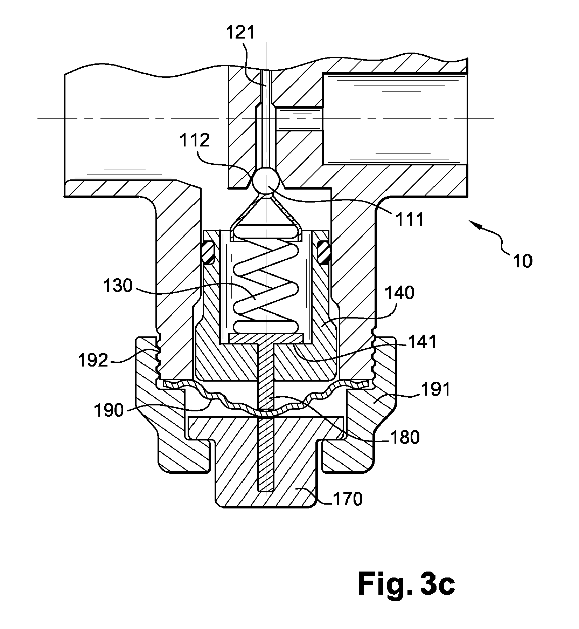

In the alternative embodiment of the figure 3c, the passage of the drive pin 180 through the housing 140 is sealed by a sealing membrane 190 which is hermetically fixed to the thermostatic expansion valve device 10. As an example, the sealing membrane 190 is fixed to the thermostatic expansion valve device 10 by means of a fixation screw 191 pressing the membrane 190 onto the thermostatic expansion valve device 10. For that purpose, the thermostatic expansion valve device 10 is provided with an external thread 192.

The fixation screw 190 may also be held to the linear motor 170 as shown in Figure 3c so that the thermostatic expansion valve device 10 and the linear motor 170 form a single equipment.

The present invention is not restricted to the previously described embodiments provided for illustrative purposes only, and encompasses other alternative embodiments that those skilled in the art will be able to anticipate within the scope of the claims.

## Claims

1. A thermostatic expansion valve device (10) for a refrigerant fluid circuit, comprising :
- valve means (111) intended to control the refrigerant fluid mass flow rate through the thermostatic expansion valve device (10),
- external control means (130) acting on valve means (111) so as to define a working setting for the thermostatic expansion valve device (10),
- internal control means (121, 122, 123) acting on valve means (111) so as to control the refrigerant fluid mass flow rate corresponding to the working setting according to internal thermal parameters of the refrigerant fluid circuit,
**characterised in that** the thermostatic expansion valve device (10) further comprises adjustment means (150, 170) for controlling external control means (130) so as to change the working setting in operation of the thermostatic expansion valve device (10).

2. The thermostatic expansion valve device according to claim 1, wherein said external control means comprise a compression spring (130) intended to bias valve means (111), the working setting being defined by the biasing state of the compression spring (130), and wherein adjustment means (150, 170) are suitable to change the biasing state of the compression spring (130).

3. The thermostatic expansion valve device according to claim 2, wherein the compression spring (130) is arranged in a housing (140) in the thermostatic expansion valve device (10) and a first end of the compression spring (130) is in abutment against valve means (111)

4. The thermostatic expansion valve device according to claim 3, wherein the housing (140) is screwed in the thermostatic expansion valve device (10) and a second end of the compression spring (130) is in abutment against a wall (141) of the housing (140)

5. The thermostatic expansion valve device according to claim 4, wherein adjustment means comprise screw-driving means (150) suitable to move the housing (140) so as to shift the wall (141) and change the compression state of the compression spring (130).

6. The thermostatic expansion valve device according to claim 4 or 5, wherein the screw-driving means comprise a stepper motor (150).

7. The thermostatic expansion valve device according to claim 3, wherein a second end of the compression spring (130) is in abutment against a drive pin (180) arranged in the housing (140).

8. The thermostatic expansion valve device according to claim 7, wherein adjustment means comprise translating means (170) suitable to shift the drive pin (180) through a wall (141) of the housing (140) so as to change the compression state of the compression spring (130).

9. The thermostatic expansion valve device according to claim 8, wherein translating means comprise a linear motor (170).

10. The thermostatic expansion valve device according to any of claims 3 to 9, wherein the housing (140) is screwed in the thermostatic expansion valve device (10) so as to enable a pre-adjustment of the working setting.

11. The thermostatic expansion valve device according to any of preceding claims, wherein adjustment means are controlled according to external parameters.

12. The thermostatic expansion valve device according to claim 11, wherein adjustment means are controlled by an electronic unit (160) according to external parameters.
